# EUROPEAN PATENT SPECIFICATION

(11) **EP 1 513 647 B1**
(45) Date of publication and mention of the grant of the patent: **30.08.2006**
(21) Application number: 02741174.3
(22) Date of filing: 13.06.2002
(51) Int. Cl.: B23K 9/32, A61F 9/06

(54) **ARC WELDING GLARE SHIELDING DEVICE**
BLENDSCHUTZVORRICHTUNG IN LICHTBOGENSCHWEISSEN
DISPOSITIF ANTI-EBLOUISSEMENT UTILE POUR LE SOUDAGE A L'ARC

(43) Date of publication of application: 16.03.2005
(73) Proprietor: Trexim S.R.L., 23862 Civate (IT)
(72) Inventor: PIROLA, Giuseppe, I-23845 Costa Masnaga (IT); WERTHMULLER, René, CH-3257 Ammerzwil (CH)
(74) Representative: Jorio, Paolo
(86) International application number: PCT/IT2002/000393
(87) International publication number: WO 2003/106097

(56) References cited:
- EP-A- 0 496 672
- US-A- 4 638 146
- US-A- 5 519 522
- US-A- 5 880 793
- US-B1- 6 483 090

## Description

The present invention relates to an arc welding glare shielding device according to the preamble of claim 1 (see, for example, FR-A-2 787 701), a welding helmet and a welding kit.

### BACKGROUND ART

As is known, welding masks or helmets currently feature glare shielding devices, which are selectively dimmed when exposed to potentially harmful light sources, but remain substantially transparent under - normal conditions. Such devices comprise one or & more liquid-crystal (LCD) shields, and optoelectronic sensors for detecting sparks associated with the formation of electric arcs when welding. When the intensity of the incident light on the optoelectronic sensors exceeds a given, normally adjustable, activation threshold, LCD shields are dimmed more or less instantaneously to protect the user's eyes. On the other hand, when not welding, i.e. in the absence of sparks caused by the formation of electric arcs, dimming of the LCD shields ceases, and the user has normal vision, even wearing the safety helmet or mask.

Shields employing optoelectronic sensors, however, have serious drawbacks. That is, optoelectronic sensors must be exposed directly at all times to the light source (i.e. electric arcs) for shielding, and, if an opaque object is interposed between them and the source, the intensity of the incident light is drastically reduced, and may not be sufficient to dim the LCD shields. Moreover, even if not struck directly by the light emitted by the arcs during welding, various degrees of eye damage can still be caused by reflected glare. On the other hand, if the activation threshold is set too low, ambient light intensity may also be sufficient to dim the LCD shields, which therefore afford little advantage. In other words, potentially hazardous situations occur if the welding electrode is not visible at all times by the optoelectronic sensors.

By way of a solution to the problem, Patent US-A-5,880,793 proposes using a Combination of optoelectronic sensors, and non-optical sensors for detecting quantities other than light intensity but nevertheless related to the formation of arcs, such as magnetic field strength, which, as is known, is significantly disturbed when arc welding. In the solution described in the above patent, for each quantity detected, a respective independently adjustable activation threshold is established; and the LCD shields are dimmed when at least one of the activation thresholds is exceeded. The not-optical sensor must be enabled beforehand by the optoelectronic sensor. More specifically, upon the optoelectronic sensor detecting a welding arc spark, the non-optical sensor is enabled at least for a predetermined time interval, during which the LCD shields are controlled on the basis of signals supplied by both sensors, and then the non-optical sensor is again disabled.

This, however, only provides a partial solution to the problem, in that, whereas electromagnetic field strength sensors provide for detecting an arc even with obstacles in between, LCD shields can easily be dimmed by extraneous electromagnetic fields present in numerous environments. In fact, it is rarely possible to simply adjust the activation threshold to eliminate interference, while at the same time ensuring adequate user protection, so that the non-optical sensors must be disabled, as described above, when welding is not in progress, and use made initially of the optoelectronic sensors. In other words, in many cases, using non-optical sensors is not sufficient in itself to eliminate the drawbacks of shielding devices with optoelectroniC sensors alone. And in any case, a combination of both optoelectronic and non-optical sensors must be used.

### DISCLOSURE OF THE INVENTION

It is an object of the present invention to provide a glare shielding device designed to eliminate the aforementioned drawbacks :

According to the present invention, there is provided a glare shielding device as claimed in claim 1.

Parameters associated with waveforms generated by welding arcs can thus be calculated and controlled; and the problems posed using optoelectronic sensors are eliminated by eliminating the need for a straight, clear path between the source of the detected quantity (arc) and the sensor. In other words, the user is safely protected even if the arc is accidentally concealed from the sensor when welding. Moreover, eliminating the optoelectronic sensors makes for a compact device.

The invention also provides a welding helmet according to claim 14 and a welding kit according to claim 15.

### BRIEF DESCRIPTION OF THE DRAWINGS

A preferred, non-limiting embodiment of the present invention will be described by way of example with reference to the accompanying drawings, in which:
Figure 1 shows a three-quarter top view in perspective of a welding helmet equipped with a glare shielding device;
Figure 2 shows a simplified block diagram of a glare shielding device in accordance with a first embodiment of the present invention;
Figures 3a and 3b show graphs of quantities relative to the Figure 2 device;
Figure 4 shows a simplified block diagram of a glare shielding device in accordance with a second embodiment of the present invention;
Figure 5 shows a three-quarter top view in perspective of a welding machine housing part of the Figure 4 device.

### BEST MODE FOR CARRYING OUT THE INVENTION

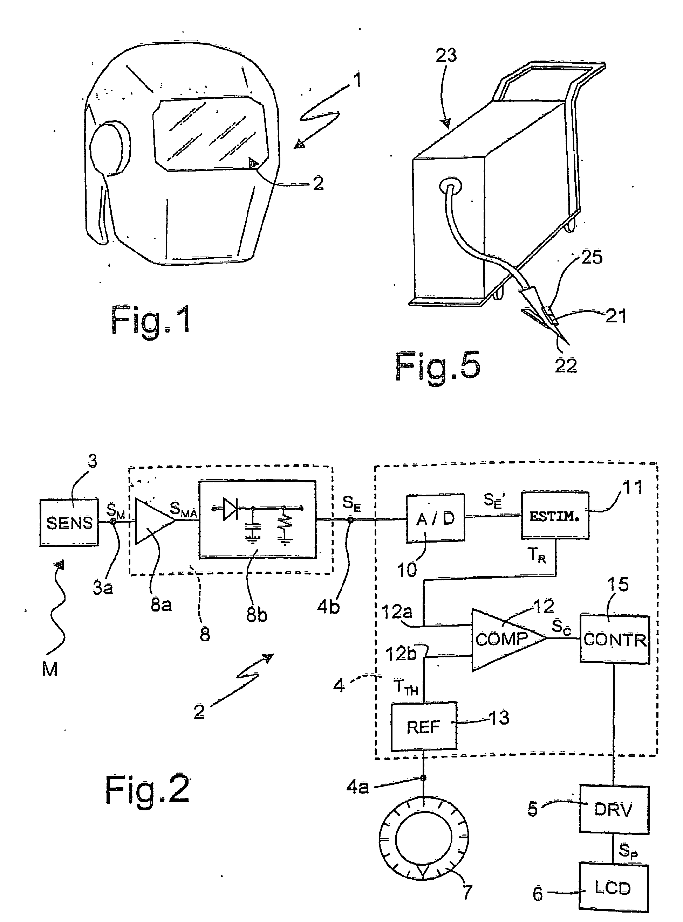

Number 1 in Figure 1 indicates as a whole a welding helmet equipped with a glare shielding device 2. More specifically, device 2 is a liquids-crystal, selectively dimmed type.

As shown in Figure 2, device 2 comprises a non-optical sensor 3; a preprocessing stage 8; a logic unit 4; a drive circuit 5; and a liquid-crystal shield 6; and a manual control 7 is connected to a control input 4a of logic unit 4.

In a preferred embodiment of the invention, sensor 3; which is located close to shield 6 on helmet 1, is a magnetic field strength sensor, and supplies at its output 3a an analog signal S_{M} related to the strength of a magnetic field M in which sensor 3 is immersed. A number of magnetic sources, including the electric arcs formed when welding, contribute to determining the strength of the magnetic field. More specifically, the formation of such electric arcs produces variations in magnetic field strength with frequencies normally ranging between 100 Hz and 3 MHz. Output 3a of sensor 3 is connected to an input of preprocessing stage 8.

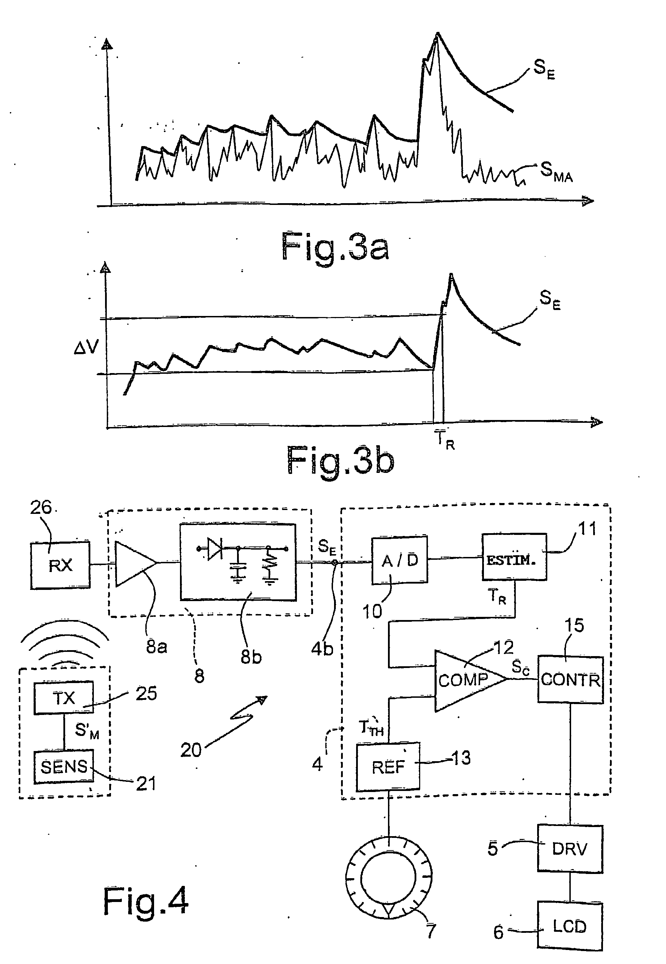

More specifically, preprocessing stage 8 comprises an amplifying stage 8a and an envelope detector 8b cascade-connected to each other. Amplifying stage 8a receives analog signal S_{M} from sensor 3, and supplies envelope detector 8b with an amplified analog signal S_{MA}. Envelope detector 8b, in itself known, is preferably a peak detector, and supplies an analog envelope signal S_{E} at its output connected, to the detecting input 4b of logic unit 4. Analog envelope signal S_{E} is related in known manner to amplified analog signal S_{MA}. More specifically, analog envelope signal S_{E} substantially follows the leading edges of amplified analog signal S_{MA}, but has damped trailing edges and decreases more slowly (see Figure 3a.

Logic unit 4 comprises an analog-digital converter 10; an estimating stage 11; a comparator 12; a reference-generating block 13; and a control circuit 15. More specifically, analog-digital converter 10 is connected between detecting input 4b - to receive analog envelope signal S_{E} - and estimating stage 11, which has an Output connected to a first input 12a of comparator 12. Analog= digital converter 10 samples analog envelope signal Sₛ, and supplies a digital envelope signal S_{E}'.

Estimating stage 11 determines in known manner the rise times T_{R} of envelope signal S_{E} = i.e. as shown in Figure 3b, the time taken by analog envelope signal S_{E} to increase by a predetermined quantity V, e.g. 0.5 V, from a minimum point - and supplies first input 12a of comparator 12 with a numeric value indicating rise time T_{R}.

Comparator 12 has a second input 12b connected to an output of reference-generating block 13, which supplies a threshold time interval T_{TH} (e.g. 1 ms) which can be set by means of manual control 7; and an output connected to control circuit 15 and supplying a control signal S_{c} having a first logic value (e.g. low when rise time T_{R}. is greater than threshold time interval T_{TH}, and conversely a second logic value high.

Control circuit 15 is connected to drive circuit 5, which has an output connected to shield 6 and supplying a drive signal S, related to control signal S_{c}.

During welding, sensor 3 detects disturbance of the magnetic field caused by the formation of electric arcs, and supplies analog signal S_{M}, the leading and trailing edges of which are enhanced and damped respectively by preprocessing stage 8. More specifically, the analog envelope signal S_{E} supplied by envelope detector 8b is related to the maximum amplitude of analog signal S_{M} and, therefore, to electromagnetic field strength, so that the amplitude peaks of the electromagnetic field produced by formation of a welding arc can be determined accurately by filtering disturbance from different sources, and any obstacles between the arc and sensor 3 are not sufficient to significantly shield disturbance of the magnetic field caused by formation of the arc.

Via drive circuit 5, control circuit 15 controls shield 6 on the basis of envelope signal S_{E} and, consequently, on the basis of the form of analog signal S_{N}. More specifically, in the presence of a welding arc, envelope signal Sₓ (or, equivalently, S_{E'}) has rapid leading edges; in which case, rise time T_{R} is lower than threshold time interval T_{TH}, control signal S_{c} is high, and control circuit 15 enables and dims shield 6 to protect the user. Conversely, when the welding arc ceases, envelope signal S_{E} decreases, so that rise time T_{R} is considered zero, control signal S_{C} is low, and control circuit 5 restores shield 6 to the rest condition in which it is substantially transparent. Transition to the rest state may take place immediately upon control signal S_{c} switching to the low logic value, or control circuit 15 may interpose a standby interval of given length to be on the safe side.

In other words, preprocessing stage 8, estimating stage 11, and comparator 12 form a waveform recognition circuit for determining envelope signal S_{E} patterns associated with the formation of welding arcs. More specifically, in the presence of a rapid increase in envelope signal S_{E} (caused by a rapid increase in electromagnetic field strength), a welding-arc-related event is determined, and shield 6 is therefore dimmed.

Alternatively, estimating stage 11 determines the maximum positive variation in envelope signal SE within a predetermined time window. In which case, reference-generating block 13 supplies comparator 12 with a threshold amplitude value; and, if the maximum positive variation in envelope signal S_{B} exceeds the threshold amplitude value, comparator 12 sets control signal Sc to the high logic value, and conversely to the low logic value.

In other words, in this case, estimating circuit 11 estimates the time derivative of envelope signal S_{E}; and, when the derivative exceeds a given threshold, a welding-arc-related event is determined and shield 6 dimmed as described above.

Figures 4 and 5 show a further embodiment of the invention, in which any parts identical with those already described are indicated using the same reference numbers. In this case, a glare shielding device 20 comprises a chemical species, eg. ozone, concentration sensor. 21 located at a welding electrode 22 of a welding machine 23 (Figure 5) and connected to a transmitting, e.g. radio-wave, circuit 25, to which sensor 21 supplies an analog signal S_{M}' related to the ozone concentration around sensor 21. Device 20 also comprises a receiving circuit 26 located on helmet 1, close to shield 6 (at a distance from transmitting circuit 25), and connected to preprocessing stage 8. Receiving circuit 26 receives analog signal S_{M}' from transmitting circuit 25, and supplies it to preprocessing stage 8, which, as before, amplifies analog signal S_{M}' to determine envelope signal S_{E}, which is then sampled; and estimating stage 11 calculates rise time T_{R}, on the basis of which control circuit 15 controls shield 6.

Clearly, changes may be made to the device as described herein without, however, departing from the scope of the present invention.

In particular, any type of non-optical sensor can be used to determine a quantity related to the formation of electric arcs when welding, e.g. sensors operating in various frequency bands substantially ranging between 100 Hz and 3 MHz, such as radio-frequency sensors. The comparator may be replaced with an adjustable-gain amplifier. The device may even comprise other components for preprocessing the signal before sampling, particularly when the signal from the sensor is transmitted from a distance. And finally, the transmitting and receiving circuits may be of a different type and, in particular, connected by optical fibers.

## Claims

1. A glare shielding device comprising:
at least one liquid-crystal shield (6);
a non-optical sensor (3; 21) low supplying a first signal (S_{M}; S_{M'}) related to a quantity associated with the formation of an electric arc; and
a control circuit (15) connected to said sensor (3; 21) and to said shield (6) to control said shield (6) on the basis of said first signal (S_{M}; S_{M}');
**characterized in that** it comprises waveform recognition means (8, 11, 12), connected between said sensor (3; 21) and said control circuit (15), for recognizing predetermined patterns of a second signal. (S_{E}), which are associated with the formation of welding arcs, wherein said second signal (S_{E}) is related to an envelope of said first signal (S_{M}; S_{M}') and said control circuit (15) is configured for dimming said shield (6) on recognition of said patterns.

2. A device as claimed in Claim 1, **characterized in that** said waveform recognition means (8, 11, 12) comprise an envelope detector (8b) for determining the envelope of said first signal (S_{M}; S_{M}') and supplying said second signal (S_{E}) related to the envelope of said first signal.

3. A device as claimed in Claim 2, **characterized in that** said envelope detector (8b) is a peak detector.

4. A device as claimed in Claim 2 or 3, **characterized in that** said waveform recognition means (8, 11, 12) comprise an estimating circuit (11) for estimating a rise time (T_{R}) of said second signal (S_{E}).

5. A device as claimed in Claim 4, **characterized in that** said waveform recognition means (8, 11, 12) comprise a comparing stage (12) for comparing said rise time (T_{R}) with a predetermined threshold time (T_{TH}).

6. A device as claimed in Claim 5, **characterized by** comprising a control stage (15) connected to said comparing stage (12) and to said shield (6) to dim said shield (6) when said rise time (T_{R}) is less than said threshold time (T_{TH}).

7. A device as claimed in Claim 2, **characterized by** comprising derivative means (11) for estimating a time derivative of said second signal.

8. A device as claimed in Claim 7, **characterized in that** said control circuit is connected to said derivative means (11) and to said shield (6) to dim said shield (6) when said time derivative exceeds a predetermined threshold.

9. A device as claimed in any one of the foregoing Claims, **characterized in that** said sensor (3) is a magnetic sensor.

10. A device as claimed in Claim 9, **characterized in that** said sensor (3) is located close to said shield (6).

11. A device as claimed in any one of Claims 1 to 8, **characterized in that** said sensor (21) is a chemical species concentration sensor.

12. A device as claimed in Claim 11, **characterized in that** said sensor (21) is an ozone concentration sensor.

13. A device as claimed in any one of the foregoing Claims, **characterized by** comprising a transmitting circuit (25) and a receiving circuit (26), which are interposed between said sensor (21) and said waveform recognition means (8, 11, 12) to respectively transmit and receive said first signal (S_{M}') over a distance.

14. A welding helmet comprising a glare shielding device (2; 20), **characterized in that** said glare shielding device (2; 20) is as claimed in any one of Claims 1 to 13.

15. A welding kit comprising a welding machine (23) having a welding electrode (22) ; and a welding helmet (1) having a glare shielding device (20) ; **characterized in that** said glare shielding device (20) is as claimed in Claim 13; and **in that** said sensor (21) and said transmitting circuit (25) are located close to said welding electrode (22).

## Patentansprüche

1. Blendschutzvorrichtung mit
mindestens einer Flüssigkristallabschirmung (6);
einem nichtoptischen Sensor (3; 21) zum Liefern eines ersten Signales (S_{M}; S_{M}'), das auf eine der Ausbildung eines elektrischen Lichtbogens zugeordnete Größe bezogen ist; und
einer Steuerschaltung (15), die an den Sensor(3; 21) und die Abschirmung (6) angeschlossen ist, um die Abschirmung (6) auf der Basis des ersten Signales (S_{M}; S_{M}') zu steuern;
**dadurch gekennzeichnet, dass** die Blendschutzvorrichtung Wellenerkennungseinrichtungen (8, 11, 12) aufweist, die zwischen den Sensor (3; 21) und die Steuerschaltung (15) geschaltet sind, um vorgegebene Muster eines zweiten Signales (S_{E}) zu erkennen, die der Ausbildung von Schweißbögen zugeordnet sind, wobei das zweite Signal (S_{E}) auf eine Umhüllung des ersten Signales (S_{M}; S_{M}') bezogen ist und die Steuerschaltung (15) zum Dämpfen der Abschirmung (6) bei Erkennung der Muster ausgebildet ist.

2. Vorrichtung nach Anspruch 1, **dadurch gekennzeichnet, dass** die Wellenerkennungseinrichtungen (8, 11, 12) einen Umhüllungsdetektor (8b) zum Bestimmen der Umhüllung des ersten Signales (S_{M}; S_{M}') und zum Liefern des zweiten Signales (S_{E}), das auf die Umhüllung des ersten Signales bezogen ist, umfassen.

3. Vorrichtung nach Anspruch 2, **dadurch gekennzeichnet, dass** der Umhüllungsdetektor (8b) ein Pikdetektor ist.

4. Vorrichtung nach Anspruch 2 oder 3, **dadurch gekennzeichnet, dass** die Wellenerkennungseinrichtungen (8, 11, 12) eine Schätzschaltung (11) zum Schätzen einer Anstiegszeit (T_{R}) des zweiten Signales (S_{E}) aufweisen.

5. Vorrichtung nach Anspruch 4, **dadurch gekennzeichnet, dass** die Wellenerkennungseinrichtungen (8, 11, 12) eine Vergleichsstufe (12) zum Vergleichen der Anstiegszeit (T_{R}) mit der vorgegebenen Schwellenzeit (T_{TH}) umfassen.

6. Vorrichtung nach Anspruch 5, **dadurch gekennzeichnet, dass** sie eine Steuerstufe (15) aufweist, die an die Vergleichsstufe (12) und die Abschirmung (6) angeschlossen ist, um die Abschirmung (6) zu dämpfen, wenn die Anstiegszeit (TR) geringer ist als die Schwellenzeit (T_{TH}).

7. Vorrichtung nach Anspruch 2, **dadurch gekennzeichnet, dass** sie Ableitungseinrichtungen (11) zum Schätzen einer zeitlichen Ableitung des zweiten Signals aufweist.

8. Vorrichtung nach Anspruch 7, **dadurch gekennzeichnet, dass** die Steuerschaltung an die Ableitungseinrichtungen (11) und die Abschirmung (6) angeschlossen ist, um die Abschirmung (6) zu dämpfen, wenn die zeitliche Ableitung eine vorgegebene Schwelle übersteigt.

9. Vorrichtung nach einem der vorangehenden Ansprüche, **dadurch gekennzeichnet, dass** der Sensor (3) ein magnetischer Sensor ist.

10. Vorrichtung nach Anspruch 9, **dadurch gekennzeichnet, dass** der Sensor (3) nahe an der Abschirmung (6) angeordnet ist.

11. Vorrichtung nach einem der Ansprüche 1 - 8, **dadurch gekennzeichnet, dass** der Sensor (21) ein Sensor für die Konzentration einer chemischen Spezies ist.

12. Vorrichtung nach Anspruch 11, **dadurch gekennzeichnet, dass** der Sensor (21) ein Ozonkonzentrationssensor ist.

13. Vorrichtung nach einem der vorangehenden Ansprüche, **dadurch gekennzeichnet, dass** sie eine Übertragungsschaltung (25) und eine Empfangsschaltung (26) aufweist, die zwischen dem Sensor (21) und den Wellenerkennungseinrichtungen (8, 11, 12) angeordnet sind, um das erste Signal(S_{M}') über eine Distanz zu übertragen und zu empfangen.

14. Schweißhelm mit einer Blendschutzvorrichtung (2; 20), **dadurch gekennzeichnet, dass** die Blendschutzvorrichtung (2; 20) nach einem der Ansprüche 1 - 13 ausgebildet ist.

15. Schweißausrüstung mit einer Schweißmaschine (23), die eine Schweißelektrode (22) aufweist, und einem Schweißhelm (1) mit einer Blendschutzvorrichtung (20), **dadurch gekennzeichnet, dass** die Blendschutzvorrichtung (20) nach Anspruch 13 ausgebildet ist und dass der Sensor (21) und die Übertragungsschaltung (25) nahe an der Schweißelektrode (22) angeordnet sind.

## Revendications

1. Dispositif d'écran anti-éblouissement comprenant :
au moins un écran (6) à cristaux liquides ;
un capteur non optique (3, 21) pour amener un premier signal (S_{M}, S_{M'}) relatif à une quantité associée à la formation d'un arc électrique ; et
un circuit de commande (15) relié audit capteur (3, 21) et audit écran (6) pour commander ledit écran (6) sur la base dudit premier signal (S_{M}, S_{M'}) ;
**caractérisé en ce qu'**il comprend des moyens de reconnaissance de forme d'onde (8, 11, 12) reliés entre ledit capteur (3, 21) et ledit circuit de commande (15) pour reconnaître des modèles prédéterminés d'un deuxième signal (S_{E}) qui sont associés à la formation d'arcs de soudage, dans lequel ledit deuxième signal (S_{E}) est relatif à une enveloppe dudit premier signal (S_{M}, S_{M'}) et ledit circuit de commande (15) est configuré pour obscurcir ledit écran (6) lors de la reconnaissance desdits modèles.

2. Dispositif selon la revendication 1, **caractérisé en ce que** lesdits moyens de reconnaissance de forme d'onde (8, 11, 12) comportent un détecteur d'enveloppe (8b) pour déterminer l'enveloppe dudit premier signal (S_{M}, S_{M'}) et alimenter ledit deuxième signal (S_{E}) relatif à l'enveloppe dudit premier signal.

3. Dispositif selon la revendication 2, **caractérisé en ce que** ledit détecteur d'enveloppe (8b) est un détecteur de pic.

4. Dispositif selon la revendication 2 ou 3, **caractérisé en ce que** lesdits moyens de reconnaissance de forme d'onde (8, 11, 12) comportent un circuit d'estimation (11) pour estimer le temps de montée (T_{R}) dudit deuxième signal (S_{E}).

5. Dispositif selon la revendication 4, **caractérisé en ce que** lesdits moyens de reconnaissance de forme d'onde (8, 11, 12) comportent un étage de comparaison (12) pour comparer ledit temps de montée (T_{R}) avec une durée de seuil prédéterminée (T_{TH}).

6. Dispositif selon la revendication 5, **caractérisé en ce qu'**il comprend un étage de commande (15) relié audit étage de comparaison (12) et audit écran (6) pour obscurcir ledit écran (6) lorsque ledit temps de montée (T_{R}) est inférieur audit temps de seuil (T_{TH}).

7. Dispositif selon la revendication 2, **caractérisé en ce qu'**il comprend des moyens de dérivation (11) pour estimer une dérivée de temps dudit deuxième signal.

8. Dispositif selon la revendication 7, **caractérisé en ce que** ledit circuit de commande est relié audit moyen de dérivation (11) et audit écran (6) pour obscurcir ledit écran (6) lorsque ladite dérivée de temps dépasse un seuil prédéterminé.

9. Dispositif selon l'une quelconque des revendications précédentes, **caractérisé en ce que** ledit capteur (3) est un capteur magnétique.

10. Dispositif selon la revendication 9, **caractérisé en ce que** ledit capteur (3) est situé près dudit écran (6).

11. Dispositif selon l'une quelconque des revendications 1 à 8,
**caractérisé en ce que** ledit capteur (21) est un capteur à concentration d'espèces chimiques.

12. Dispositif selon la revendication 11, **caractérisé en ce que** ledit capteur (21) est un capteur à concentration d'ozone.

13. Dispositif selon l'une quelconque des revendications précédentes, **caractérisé en ce qu'**il comprend un circuit de transmission (25) et un circuit de réception (26) qui sont interposés entre ledit capteur (21) et lesdits moyens de reconnaissance de forme d'onde (8, 11, 12) pour transmettre et recevoir respectivement ledit premier signal (S_{M'}) sur une distance.

14. Casque de soudage comprenant un dispositif d'écran anti-éblouissement (2, 20), **caractérisé en ce que** ledit dispositif d'écran anti-éblouissement (2, 20) est selon l'une quelconque des revendications 1 à 13.

15. Nécessaire de soudage comprenant un dispositif de soudage (23) ayant une électrode de soudage (22) et un casque de soudage (1) ayant un dispositif d'écran anti-éblouissement (20), **caractérisé en ce que** ledit dispositif d'écran anti-éblouissement (20) est selon la revendication 12 et **en ce que** ledit capteur (21) et ledit circuit de transmission (25) sont situés près de ladite électrode de soudage (22).
